# EUROPEAN PATENT APPLICATION

(11) **EP 2 091 120 A1**
(43) Date of publication of application: **19.08.2009**
(21) Application number: 08425097.6
(22) Date of filing: 18.02.2008
(51) Int. Cl.: H02G 3/32

(54) **Suspension structure anchorable to a ceiling for support brackets of cable duct systems**

(71) Applicant: Bticino S.p.A., 20154 Milano (IT)
(72) Inventor: Garassino, Luca, 15067 Novi Ligure (IT); Gandini, Paolo, 15065 Frugarolo (IT)
(74) Representative: Deambrogi, Edgardo

(57) **Abstract**

A suspension system for supporting support brackets for cable duct systems or electrical fittings is described, comprising, in combination:
- a threaded bar (10) anchorable to a load-bearing structure;
- a coupling profile section (20) for the brackets or equipments, which can be stably coupled to the bar (10) lower end; and
- connecting members (30) of the profile section (20) with the bar (10), including at least one hanger member (32; 32, 32'; 32, 32") adapted to be coupled to the bar (10) through first clamping members (44a, 44b), and to the profile section through second clamping members (46a, 46b).

## Description

The present invention relates to the electric ducts field and, specifically, a suspension structure anchorable to a ceiling for supporting brackets or similar profile sections supporting cable duct systems, such as, particularly, a suspension structure anchorable to the ceiling of road tunnels.

For the installation of cable duct systems in industrial ducts, where an abutment of the channels or trays, or the respective support brackets, against the walls of the premises involved is not possible, it is known to provide ceiling suspensions through profile sections or threaded bars which are adapted to support one or more of such brackets.

For supporting heavy loads, it is known to use a portal suspension structure, comprising a pair of bars or profile sections overhanging from the ceiling, adapted to support therebetween a beam member according to a so-called "cradle" configuration.

For supporting lightweight loads, this "cradle" configuration turns out to be bulky and costly, thus a simpler configuration is preferred, which is based on the provision of a single support member for each anchoring point to the load-bearing structure.

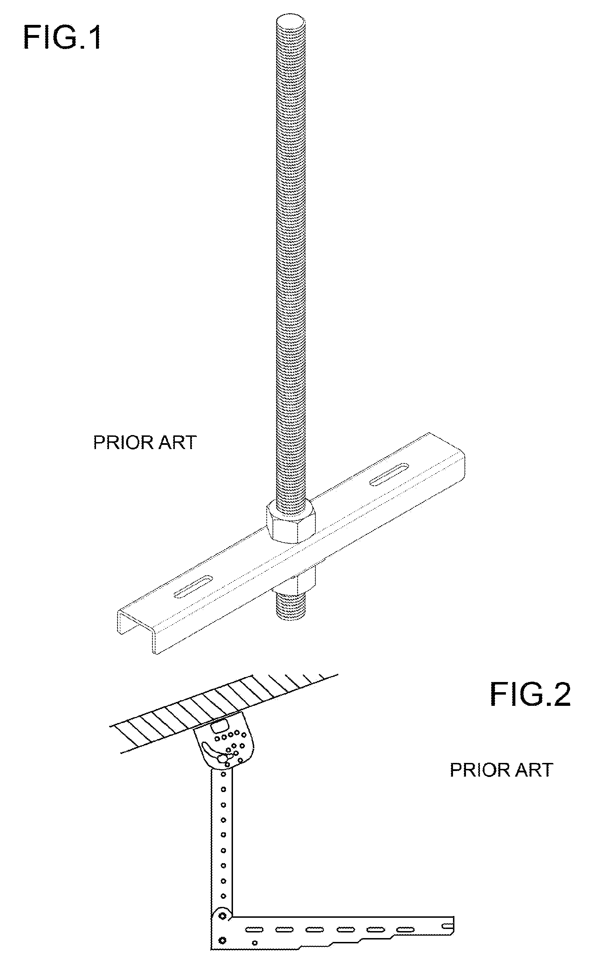

The prior art providing the use of threaded bars is shown in Fig. 1. It is often employed for the manufacture of suspension structures anchorable to the ceiling of tunnels for the road network, whether pedestrian, road, railway, or underground, due to the high manufacture and adaptation ease and inexpensiveness on inclined walls or arched vaults.

The threaded bar can be directly secured to the load-bearing structure by means of a wall drilling operation, inserting of bar, and subsequent injection of expanding material for the cementing of the manufactured structure in position. The bracket, or similar profile section, acting as a duct support is then secured to the desired height, as shown in the Figure, by clamping two nuts and a lock nut. Finally, the bar is cut to measure in order to reduce the encumbrance thereof inferiorly relative to the bracket.

Disadvantageously, such threaded bar suspension system does not allow adding subsequently further brackets, unless removing the preceding one, nor it allows supporting cantilever brackets. Furthermore, unlikely the installation operation, which turns out to be simplified, each optional re-use of a threaded bar instead of the replacement thereof involves adding a bar appendix when it is necessary to reach a different height, which occurs by interposition of a sleeve acting as a joint, with considerable deterioration of the mechanical performance of the overall system.

The prior art providing for the use of profile sections is represented in Fig. 2.

A drilled plate for the anchoring to the load-bearing structure is provided, to which coupling profile sections are welded or otherwise removably connected, which extend vertically or obliquely and are adapted to receive the brackets according to the support configuration required.

The coupling profile section, generally of the so-called "U" or "C" type, having a bottom wall which a pair of parallel and orthogonal side edges extends from, is linked to the anchoring plate by welding or bolting at an end. Then the plate is firmly secured to the ceiling of the premises, or a similar load-bearing structure, by means of small blocks engaging into the openings which it is provided with.

This type of support is also adapted to suspensions from inclined load-bearing structures through an anchoring plate with adjustable inclination, with continuous or discrete adjustment of the inclination.

Advantageously, this structure ensures a high mechanical strength without compromising the installation flexibility, and a pair of profile sections can be originally provided in reciprocal abutment with their bottom wall to support brackets projecting towards opposite directions. If an enlargement of the ducting is necessary, further cantilever brackets can be added at different heights of the profile section, so as to obtain an overlapped configuration. Furthermore, the profile section is adapted to readily receive fittings such as, in the example of applications for road network tunnels, lamps or splitting boxes for electrical equipments.

However, the support system turns out to be more complex than a threaded bar suspension since, beside having to provide a ceiling fixing plate, the arrangement also requires a separate hanging member acting as a support for the bracket, and the joint of the profile section relative to an anchoring plate with adjustable inclination represents a member which can partially compromise the otherwise high overall mechanical rigidity.

Object of the present invention is to provide an improved support structure anchorable to a ceiling, which is easy to install to a ceiling, which has high mechanical characteristics, while ensuring a configuration flexibility once the installation is completed, particularly the possibility to enlarge the supported ducting.

According to the present invention, this object is achieved thanks to a suspension structure having the characteristics as defined in claim 1.

Particular embodiments are defined in the dependant claims, the content of which is to be intended as integral or integrating part of the present description.

Further object of the invention is a connecting assembly for the joint between the hanging components of the structure having the characteristics defined in claim 12, the particular embodiments of which are defined in the related dependant claims.

Briefly, the present invention is based on the principle to use concomitantly, in the same support point, both the types of threaded bar and profile section supports, so as to be able to exploit the advantages of each, thus overcoming the associated drawbacks when using just one type.

The use of a threaded bar for the anchoring to the load-bearing structure ensures operative simplicity and promptness, as well as adaptation of the system virtually to any type and shape of ceiling or wall.

The use of a profile section for the support of brackets or supporting profile sections of cable duct systems ensures a higher mechanical rigidity at the load application plane, and a higher installation flexibility, thus allowing a reconfiguration of the supported ducts and optional fittings, for example, the addition of further brackets at different heights, where the installation has already been performed, without requiring removal operations for the previously installed ducts.

The connection between threaded bar and profile section takes place through a new and inventive connecting assembly, implemented under the shape of a hanger or a double hanger which is secured to the threaded bar through nut and lock nut, and to the profile section through bolts or pins, so dimensioned as not to allow the rotation of the fixing nut, therefore with the aim of not requiring the use of a further fixing nut anymore, as it occurs in the case of a suspension only by means of the threaded bar.

The proposed suspension structure can be suitably completed with a double bracket adapted to the securing to profile sections, having a central seat for the insertion of the profile section, the securing of which can take place through screws or rapid fixing pins.

Furthermore, it is suitably adapted to support different fittings and electrical equipments.

Further characteristics and advantages will be set forth in more detail in the following detailed description, given by way of non-limiting example, with reference to the annexed drawings, in which:
Figs. 1 and 2 are representations of two different ceiling suspension structures according to the prior art;
Figs. 3A and 3B are perspective views, exploded and in the assembled configuration, respectively, of a ceiling suspension structure according to the invention;
Figs. 4A and 4B are perspective views, exploded and in the assembled configuration, respectively, of a detail of the ceiling suspension structure according to the invention, in a second embodiment;
Fig. 5 is a perspective view of a lower end portion of a suspension structure according to the invention, provided with double brackets for the support of cable ducts;
Fig. 6 is a perspective view of a lower end portion of a suspension structure according to the invention, provided with a fitting; and
Fig. 7 is a detailed view of an embodiment variation of a connecting assembly between threaded bar and profile section of the suspension structure of the invention.

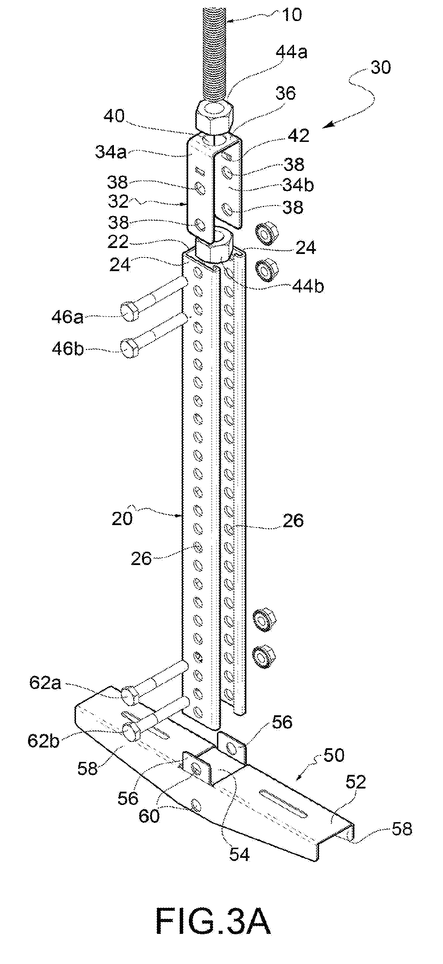

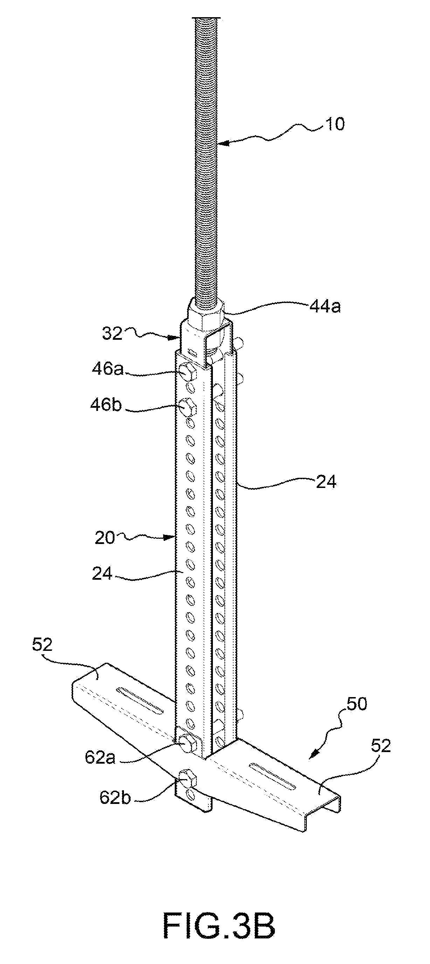

With reference to the Figs. 3A and 3B, a first embodiment is described of a suspension structure anchorable to a ceiling for the support of supporting profile sections of cable duct systems. By the term "ceiling", also any similar load-bearing structure will be meant in the following of the present description herein, such as inclined walls defining the vault of premises of a building or a general installation site, or any structural member provided in such a place, such as, for example, scaffoldings or trusses.

A threaded bar adapted to be anchored to a ceiling by drilling according to the prior art is indicated with 10. It is adapted to be secured to a wall or ceiling with any shape or orientation and, particularly, it is advantageously adapted to the use for the anchoring to vaults of tunnels, such as road or railway tunnels.

A conventional "U" profile section is indicated with 20, which has a bottom surface 22, and a pair of sides 24 perpendicular thereto, on which relative facing holes 26 are drilled, for the engage by the fixing means of one or more support brackets of cable duct systems.

A connecting assembly 30 is provided for the jointing of the profile section 20 inferiorly to the threaded bar 10, and comprises in the embodiment represented herein a hanger member 32 which can be obtained by cutting, folding, and optional coining processing of parts, starting from a metal sheet, having on the whole a "C" shape with a downwardly facing opening.

In detail, the hanger member is formed with two side portions 34a, 34b and a central bottom portion 36. Each of the side portions is provided with at least one pair of holes 38 vertically spaced of a distance between centers coincident with the distance between centers of the holes provided on the sides of the profile section, adapted to receive coupling means of the hanger to the profile section, as it will be better described herein below. The bottom portion 36 is provided with a circular central opening 40, having a dimension which is congruent with the threaded bar diameter, and such as to allow fitting the hanger member 32 essentially without clearance on the bar.

Advantageously, a pair of facing inner relieves 42 can be provided on the side portions, which can be achieved by coining, or similar thickenings, arranged at a distance relative to the lying plane of the bottom portion 36 which essentially corresponds to the thickness of a fixing nut.

The connecting assembly 30 further comprises a pair of fixing nuts 44a, 44b so provided as to be threaded on the threaded bar, optionally by means of notched washers, adapted to clamp the hanger member in position at a pre-established height on the bar, and at least one pair of rapid fixing pins or bolts 46a, 46b adapted to be inserted in the holes 38 for the stable assembling of the profile section 20 to the hanger member side portions.

The fixing nuts 44a, 44b are indicated as the upper nut and lower nut, respectively, with reference to the hanger member arrangement, the upper nut 44a being arranged externally to the hanger member, in contact with the bottom portion outwardly facing surface, and the lower nut 44b being arranged internally relative to the hanger member, in contact with the bottom portion inwardly facing surface and optionally supported, from the opposite side, through the relieves 42, where present.

In the Figs. 3A and 3B the suspension structure is shown in a support configuration of a double bracket 50 for the support of cable duct systems.

The bracket 50 has a rest surface 52 divided in two by a central opening 54 for the insertion onto the profile section, on two sides of which respective coupling tongues 56 which can face the sides 24 of the profile section 20 are obtained. On the bracket tongues 56 and folded tongues 58, fixing holes 60 are drilled, which are vertically aligned, adapted to receive rapid fixing pins or bolts 62a, 62b for the stable assembling of the bracket 50 to the profile section 20, similarly to the pins 46a, 46b.

It shall be apparent that the suspension structure is adapted to receive support brackets of a different type, or other supporting members, provided they can be firmly secured to the hanging profile section 20 according to any one of the methods widely known in the art (for example by bolting or shape-fitting in a groove of the profile section, with the aid of an anchor headed bolt and contrast spring), the description of which is not necessary herein, also since they are not *per se* relevant to the implementation and understanding of the invention.

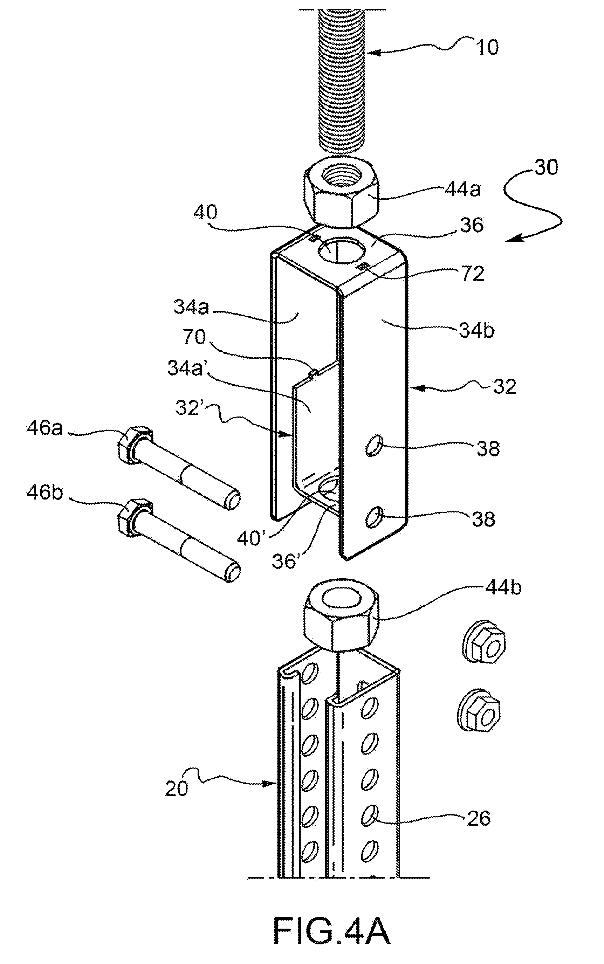

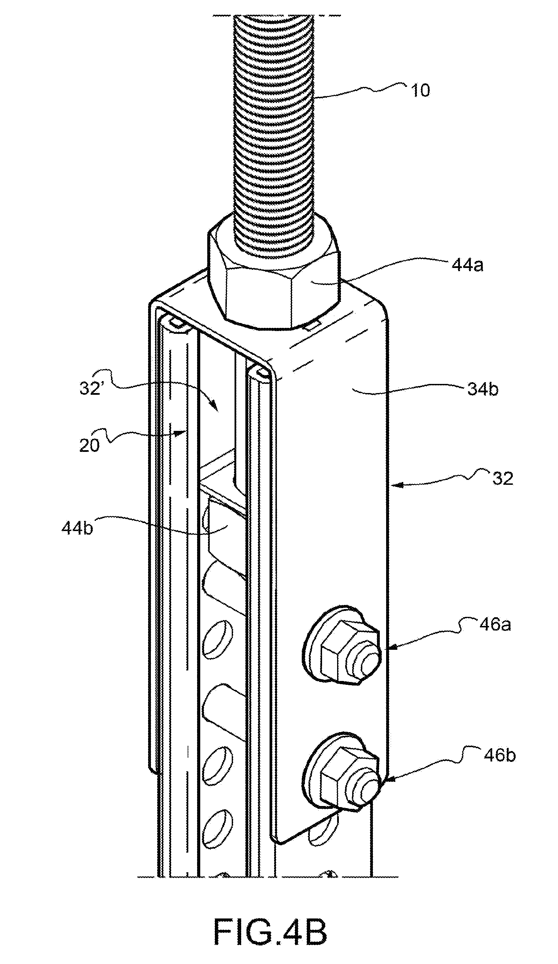

In the Figs. 4A and 4B a second embodiment of the suspension structure of the invention is described, which distinguishes itself form the preceding one for a different configuration of the connecting assembly 30 between threaded bar 10 and profile section 20. Members that are identical or functionally equivalent to those represented in the Figs. 3A and 3B have been indicated with the same reference numerals.

The connecting assembly 30 comprises, in the embodiment represented herein, a first hanger member 32 essentially similar to the one used in the preceding embodiment, to which reference is made for a detailed description, and a second hanger member 32', which can also be obtained by cutting and folding processing from a metal sheet, of an overall "C" shape with an upwardly facing opening.

In detail, the second hanger member 32' is formed with two side portions 34a', 34b' and a central bottom portion 36', provided with a circular central opening 40', having a dimension which is congruent with the diameter of the threaded bar and such as to allow fitting the hanger member 32' essentially without clearance on the bar.

At least one dimension of the second hanger member bottom portion 36' is lower than the corresponding dimension of the bottom portion 36 of the first hanger member 32, thereby the second member 32' can be axially inserted in the first member 32, inverted relative to the latter, so as to obtain an "interpenetrated Cs" configuration which on the whole is closed, having a higher torsional and flexure rigidity compared to the configuration of the connecting assembly according to the first embodiment, where the fixing nuts 44a and 44b act at a minimum distance which is dictated by the thickness of the metal sheet part constituting the hanger bottom portion 36.

Advantageously, a pair of appendixes 70 can be provided at the ends of the side portions 34a' and 34b', which are adapted to be snap-received in a corresponding pair of seats 72 obtained on the bottom portion 36 of the first hanger member 32, so as to allow the pre-assembling of a single component, while avoiding welding operations, thus facilitating the handling by an operator during an assembly operation. Alternatively, the ends of the side portions 34a' and 34b' can be free from appendixes, therefore adapted to simply abut against the inner surface of the bottom portion 36 of the member 32.

Also in this embodiment the connecting assembly 30 comprises a pair of fixing nuts 44a, 44b provided for the screwing on the threaded bar, adapted to clamp the hanger members in position at a pre-established height on the bar in an interpenetrated configuration, and at least one pair of rapid fixing pins or bolts 46a, 46b for the stable assembling of the profile section 20 to the side portions of the outmost hanger member of the two (32).

The fixing nuts 44a, 44b are indicated as upper nut and lower nut, respectively, with reference to the arrangement of the hanger members, the upper nut 44a being arranged externally relative to the first hanger member 32, in contact with the outwardly facing surface of the respective bottom portion, and the lower nut 44b being arranged externally relative to the second hanger member 32', in contact with the outwardly facing surface of the respective bottom portion.

The structure assembling operation is similar in both the embodiments described above.

Firstly, the threaded bar 10 is anchored to a ceiling, then the connecting assembly 30 is firmly coupled to the lower end thereof, which is cut to measure, by clamping the hanger member 32 (or the hanger members 32, 32' in the second embodiment) between fixing nuts 44a, 44b.

In detail, in the event a connecting assembly according to the first embodiment is used, this operation is performed by firstly screwing the upper nut 44a on the bar, then fitting the hanger member 32 on the bar, finally screwing the lower nut 44b until reaching a clamped condition of the hanger member. Where the lower nut 44b is pre-coupled to the hanger member and hold in the seat which is defined between the bottom portion 36 and the inner relieves 42, and the separating distance between the facing side portions 34a and 34b of the hanger member is suitably lower than the nut diameter, whereby the rotation thereof is prevented by shape-fitting, then it will be the threaded bar to be screwed therein; therefore, it shall be apparent that it has not to be pre-anchored to the ceiling .

In the event a connecting assembly according to the second embodiment is used, this operation is performed by firstly screwing the upper nut 44a on the bar, then fitting the first hanger member 32 and the second hanger member 32', which is optionally made integral thereto, on the bar, finally screwing the lower nut 44b until reaching a clamped condition of the hanger members.

Finally, the profile section is coupled to the connecting assembly 30 by overlapping with the hanger member (or members, in the second embodiment) side portions 34a, 34b until reaching an aligned condition of the holes 38 provided on the side portions with at least one pair of facing holes 26 obtained on the profile section sides 24.

In the first embodiment, the hanger member 32 is inserted into the profile section inner space or, alternatively, it is fitted externally thereto.

In the second embodiment, the first hanger member 32 is fitted externally to the profile section, and the second hanger member 32' is inserted into the profile section inner space.

The assembly is made integral by clamping the rapid fixing pins or bolts 46a, 46b.

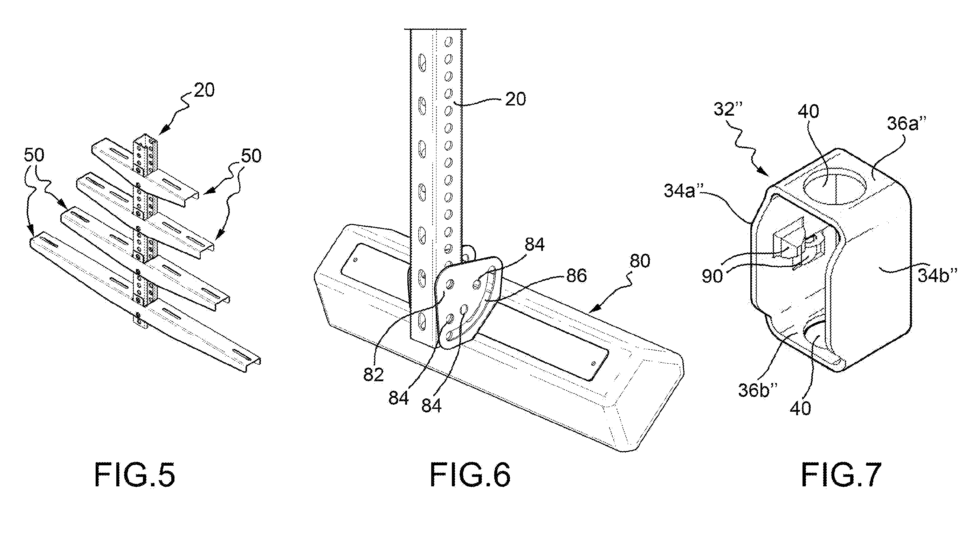

A support configuration for multiple-plane ducts is shown in Fig. 5, by way of example only, which is obtained by overlapping brackets 50, easily connectable to the profile section 20. In a configuration variation, not shown, it is possible to utilize supplementary brackets beside a first lower bracket, without removing it, provided cantilever brackets are used, which can be easily mounted on the sides 24 or the bottom surface 22 of the profile section 20 according to the prior art, directly or by means of supports, by rapid fixing by means of a pin, as described, for example, in the European Patent Application No. 1 475 871 Al to Legrand S.p.A.

An example of a fitting 80 is shown in Fig. 6, which can be connected to a suspension structure according to the invention, particularly to be used in tunnels for the road network. In the example, the fitting 80 is an illumination lamp, supported by the profile section 20 through a joint 82 with adjustable inclination, respectively to discrete (determined by the holes 84) or continuous (determined by the arched slot 86) positions.

Finally, in Fig. 7 an implementation variation of the second hanger member of the connecting assembly 30 in accordance with the second embodiment is shown. In this case, instead of the hanger member with an overall "C" shape with an upwardly facing opening, a closed hanger member 32" is provided, that is having an overall "O" shape, also obtainable by cutting and folding processing from a metal sheet, or a closed tubular or box-shaped profile with squared cross section, which is cut to measure and suitably drilled. The member 32" is formed with two side portions 34a", 34b" and two bottom portions, a first upper portion 36a", and a second lower portion 36b", respectively. Both the bottom portions 36a" and 36b" are provided with a circular central opening 40, having a dimension which is congruent with the threaded bar diameter, and such as to allow fitting the hanger member 32" essentially without clearance on the bar. The side portions are further provided with relieves 90 to avoid a possible yielding or closing thereof.

It shall be apparent, notwithstanding the principle of the invention, that the embodiments and the implementation details will be able to be widely changed compared to what has been described and illustrated by way of non-limitative example only, without for this departing from the protection scope defined by the annexed claims.

Particularly, this applies as regards the possibility to manufacture hanger members with configurations different from those described and illustrated in the above description, for example for the adaptation to profile sections which are provided with fixing holes only on the bottom surface.

## Claims

1. A suspension system for supporting support brackets for cable duct systems or electrical fittings, comprising, in combination:
- a threaded bar (10) anchorable to a load-bearing structure;
- a coupling profile section (20) for said brackets or fittings, being able to be stably coupled at the lower end of the bar (10); and
- connecting means (30) of the profile section (20) with the bar (10), including at least one hanger member (32; 32, 32'; 32, 32") adapted to be coupled to the bar (10) through first clamping means (44a, 44b), and to the profile section through second clamping means (46a, 46b).

2. The system according to claim 1, wherein said connecting means (30) of the profile section (20) with the bar (10) include a hanger member (32) having on the whole a "C" shape, with a downwardly facing opening in the assembled condition, formed by two side portions (34a, 34b), and a bottom portion (36) provided with a circular central opening (40), having a dimension which is congruent with the threaded bar diameter, and such as to allow fitting the hanger member (32) essentially without clearance on the bar.

3. The system according to claim 2, wherein each of the side portions (34a, 34b) of the hanger member (32) is provided with at least one pair of holes (38) vertically spaced of a distance between centers coincident with the distance between centers between holes provided on the sides of the coupling profile section, adapted to receive said first clamping means.

4. The system according to any preceding claim, wherein said first clamping means comprise a pair of fixing nuts (44a, 44b) provided for the screwing on the threaded bar, an upper nut (44a) adapted to be arranged externally to the hanger member (32), and a lower nut (44b) adapted to be arranged internally relative to the hanger member (32), respectively.

5. The system according to claim 4, wherein said side portions (34a, 34b) include internally a pair of facing relieves (42) adapted to provide a rest for said lower fixing nut (44b).

6. The system according to any preceding claim, wherein said second clamping means include at least one pair of rapid fixing pins or bolts (46a, 46b) adapted to be inserted into the holes (38) of the side portions (34a, 34b) of the hanger member (32) and into the holes (26) provided on the coupling profile section sides.

7. The system according to any preceding claim, wherein said connecting means (30) comprise a second hanger member (32') having on the whole a "C" shape with an upwardly facing opening in the assembled condition, formed with two side portions (34a', 34b'), and a bottom portion (36') provided with a circular central opening (40'), having a dimension which is congruent with the threaded bar diameter, and such as to allow fitting the second hanger member (32') essentially without clearance on the bar.

8. The system according to claim 7, wherein said second hanger member (32') has transversal dimensions so that it is axially insertable in the first member (32), inverted relative to the latter, so as to obtain an interpenetrated "Cs" configuration which on the whole is closed.

9. The system according to claim 7, wherein said side portions (34a' and 34b') are provided with a pair of appendixes (70) adapted to be snap-received in a corresponding pair of seats (72) which are obtained on the bottom portion (36) of the first hanger member (32).

10. The system according to claim 7, wherein said side portions (34a' and 34b') are adapted to abut against the inner surface of the member (32) bottom portion (36).

11. The system according to claim 1 to 6, wherein said connecting means (30) comprise a second hanger member (32") having an overall "O" shape, formed with two side portions (34a", 34b"), and two bottom portions (36a", 36b"), upper and lower, respectively, provided with a respective circular central opening (40), having a dimension which is congruent with the threaded bar diameter, and such as to allow fitting the hanger member (32") essentially without clearance on the bar.

12. A connecting assembly (30) between a threaded bar (10) anchorable to a load-bearing structure and a coupling profile section (20) for support brackets for cable duct systems or electrical fittings, which can be stably coupled to the bar (10) lower end,
**characterized in that** it includes at least one hanger member (32; 32, 32'; 32, 32") adapted to be coupled to the bar (10) through first clamping means (44a, 44b), and to the profile section through second clamping means (46a, 46b).

13. The assembly according to claim 12, including a hanger member (32) having on the whole a "C" shape with opening facing downwardly in the assembled condition, comprising:
- two side portions (34a, 34b) each provided with at least one pair of holes (38), vertically spaced of a distance between centers coincident with the distance between centers between holes provided on the sides of the coupling profile section and adapted to receive said first clamping means; and
- a bottom portion (36) provided with a circular central opening (40), having a dimension which is congruent with the threaded bar diameter, and such as to allow fitting the hanger member (32) essentially without clearance on the bar,
wherein said first clamping means comprise a pair of fixing nuts (44a, 44b) provided for the screwing on the threaded bar, respectively a upper nut (44a) adapted to be arranged externally to the hanger member (32), and a lower nut (44b) adapted to be arranged internally relative to the hanger member (32); and said second clamping means include at least one pair of rapid fixing pins or bolts (46a, 46b) adapted to be inserted into the holes (38) of the side portions (34a, 34b) of the hanger member (32) and into the holes (26) provided on the sides of the coupling profile section.

14. The assembly according to claim 13, wherein said side portions (34a, 34b) include internally a pair of facing relieves (42) adapted to provide a rest for said lower fixing nut (44b).

15. The assembly according to claim 13, including a second hanger member (32') having on the whole a "C" shape, having transversal dimensions so that it is axially insertable into the first member (32), inverted thereto, so as to obtain an interpenetrated "Cs" configuration which on the whole is closed, comprising:
- two side portions (34a', 34b'); and
- a bottom portion (36') provided with a circular central opening (40'), having a dimension which is congruent with the threaded bar diameter, and such as to allow fitting the second hanger member (32') essentially without clearance on the bar.

16. The assembly according to claim 15, wherein said side portions (34a' and 34b') are provided with a pair of appendixes (70) which are adapted to be snap-received in a corresponding pair of seats (72) which are obtained on the bottom portion (36) of the first hanger member (32).

17. The assembly according to claim 15, wherein said side portions (34a' and 34b') are adapted to abut against the inner surface of the member (32) bottom portion (36).

18. The assembly according to claim 13, including a second hanger member (32") having on the whole a "O" shape, having transversal dimensions so that it is axially insertable into the first member (32), comprising:
- two side portions (34a", 34b"); and
- two bottom portions (36a", 36b"), upper and lower, respectively, provided with a respective circular central opening (40), having a dimension which is congruent with the threaded bar diameter, and such as to allow fitting the hanger member (32") essentially without clearance on the bar.
